# EUROPÄISCHE PATENTSCHRIFT

(11) **EP 1 959 159 B1**
(45) Veröffentlichungstag und Bekanntmachung des Hinweises auf die Patenterteilung: **16.12.2009**
(21) Anmeldenummer: 08002789.9
(22) Anmeldetag: 15.02.2008
(51) Int. Cl.: F16F 15/121, F16H 55/36

(54) **Antriebsscheibe mit Schwingungsdämpfermitteln**
Drive disc with oscillation dampeners
Disque d'entraînement doté de moyens d'amortissement des vibrations

(30) Priorität: 16.02.2007 DE 102007008282
(43) Veröffentlichungstag der Anmeldung: 20.08.2008
(73) Patentinhaber: Muhr und Bender KG, 57439 Attendorn (DE)
(72) Erfinder: Schebitz, Michael, Dipl.-Ing., 57349 Attendorn (DE); Zacker, Matthias, Dipl.-Ing., 57439 Attendorn (DE); Schattenberg, Stefan, Dipl.-Ing., 57439 Attendorn (DE)
(74) Vertreter: Neumann, Ernst Dieter

(56) Entgegenhaltungen:
- EP-A- 1 279 807
- DE-B3-102005 055 034
- JP-A- 2002 317 647
- US-A- 1 985 296

## Beschreibung

Die Erfindung betrifft eine Antriebsscheibe mit einem Scheibenkranz und einer Nabe, die drehbar ineinander gelagert sind, und mit Federmitteln, die zwischen Scheibenkranz und Nabe verbaut sind und deren eines Ende gegenüber dem Scheibenkranz und deren anderes Ende gegenüber der Nabe im Drehsinn festgelegt sind. Derartige Antriebsscheiben sind in der älteren DE 10 2005 055 034 B3 der Anmelderin beschrieben. Antriebsscheiben dieser Art dienen in Form von Riemenscheiben zur Drehmomentübertragung in Riementrieben, beispielsweise zum Antrieb von Nebenaggregaten von Verbrennungsmotoren.

Durch steigende Verbrennungsdrücke in Verbrennungsmotoren steigt die Drehungleichförmigkeit der Kurbelwelle. Damit erhöht sich die Belastung im Riementrieb für die Nebenantriebe, der von der Kurbelwelle angetrieben wird. Die Größe der Belastung wird vorrangig durch die Massenträgheit des Generators bestimmt.

Bei den heutigen Verbrennungsmotoren entsteht durch den ungleichmäßigen Antrieb der Kurbelwelle, die sich ständig ändernden Belastungszustände der Nebenaggregate und die Elastizität des Riemens ein hochdynamisches Schwingungssystem im Nebenantrieb, d. h. im Riementrieb zum Antrieb der Nebenaggregate von der Kurbelwelle aus. Hierbei werden die Nennleistungen der Nebenaggregate ständig höher.

Generatorantriebsscheiben sind im Verhältnis zur Kurbelwellenabtriebsscheibe sehr klein, so daß das Übersetzungsverhältnis und damit die Drehzahl des Generators sehr hoch wird. Es ist nicht unüblich, daß ein Generator auf Maximaldrehzahlen von über 18.000 min⁻¹ ausgelegt wird, da die erforderliche Leistung nur durch eine hohe Wicklungszahl und/oder eine hohe Drehzahl des Generators erreicht werden kann. Ein solcher Generator muß bereits bei niedrigen Motordrehzahlen sehr hoch drehen, was eine Übersetzung von mindestens 6 zu 1 zwischen Generatordrehzahl und Motordrehzahl erforderlich macht.

Die hohe Massenträgheit des hochdrehenden Generators führt während der Verzögerungsphasen der Drehungleichförmigkeit der Kurbelwelle bei jedem Verbrennungszyklus zu erheblichen Trumkräften im Riementrieb und zu erhöhter Schlupfneigung, so daß insgesamt eine erhebliche Verschleißgefährdung für den Riemen gegeben ist. Die hohe Massenträgheit macht es dem Generator unmöglich, die teilweise hochfrequenten Drehzahländerungen mitzufahren, so daß es zu einer unvorteilhaften Belastung als Folge von Dehnung und/oder Schlupf im Riementrieb kommt.

Hiervon ausgehend liegt der vorliegenden Erfindung die Aufgabe zugrunde, Antriebsscheiben bereitzustellen, die eine Schwingungsentkopplung innerhalb eines Riementriebes in ausreichendem Maße garantieren.

Die Lösung besteht darin, daß die Federmittel aus zwei entgegengesetzt wirksamen Schraubenfedern bestehen, deren jeweils eine Enden mit dem Scheibenkranz drehfest gekoppelt sind, wobei die Federn Schraubenfedern sind, die in Achsrichtung nebeneinander angeordnet sind und die gegeneinander vorgespannt sind. Hierbei findet überwiegend eine nur elastische Drehentkopplung zwischen Kurbelwelle und Generator, sowohl für die Verzögerungsphase als auch für die Beschleunigungsphase, statt, jedoch ohne daß eine vollständige Trennung der Momentenübertragung vorgesehen ist. Bei Überlast kann eine solche vollständige Trennung jedoch gegebenenfalls auch möglich werden.

Nach der vorgenannten Lösung wird ein Dekoppler gebildet, bei dem in beiden Drehmomentübertragungsrichtungen eine in beiden Drehrichtungen federelastische Kopplung zwischen Kurbelwelle und Generator erhalten bleibt, die jedoch durch die erfindungsgemäße Anbindung zwischen Scheibenkranz und Nabe das Ausmaß der Drehungleichförmigkeit, das durch den Riementrieb auf die Generatorwelle übertragen wird, deutlich vermindert.

In bevorzugten Ausführungsformen ist vorgesehen, daß die Federn mit ersten Enden an Drehanschlägen des Scheibenkranzes formschlüssig anliegen und/ oder daß die Federn mit zweiten Enden an Drehanschlägen an der Nabe formschlüssig anliegen. Die hiermit vorgeschlagenen formschlüssigen Verbindungen erhöhen die Sicherheit der Festlegung der Federn am Scheibenkranz und an der Nabe bei nur geringem zusätzlichen konstruktivem Aufwand.

Die genannte Lösung zeichnet sich durch einfachen konstruktiven Aufbau sowie hohe Betriebssicherheit aus. Die genannte Lösung kann hauptsächlich Anwendung in Fahrzeugen mit Dieselmotoren, mit Zweimassenschwungrad und/oder mit Automatikgetrieben mit großem Massenträgheitsmoment finden. Zunehmender Bedarf besteht für die Anwendung in Benzinmotoren mit hohen Verbrennungsdrücken und großen Leistungen der Nebenantriebe. Als vorteilhafte Wirkungen der erfindungsgemäßen Antriebsscheiben sind insbesondere anzuführen
Beruhigung der Riemenschwingungen,
Reduzierung der Riemenspannerwege für den Riementrieb,
Erhöhung der Riemenlebensdauer,
Reduzierung des Kraftniveaus am Riementrieb und
verbessertes Geräuschverhalten im Riementrieb.
Insgesamt wird durch diese Wirkungen eine Anwendung von Generatoren mit höherer Leistung in aktuellen Verbrennungsmotoren möglich.

Ein bevorzugtes Ausführungsbeispiel der Erfindung ist in den Zeichnungen dargestellt und wird nachstehend beschrieben.

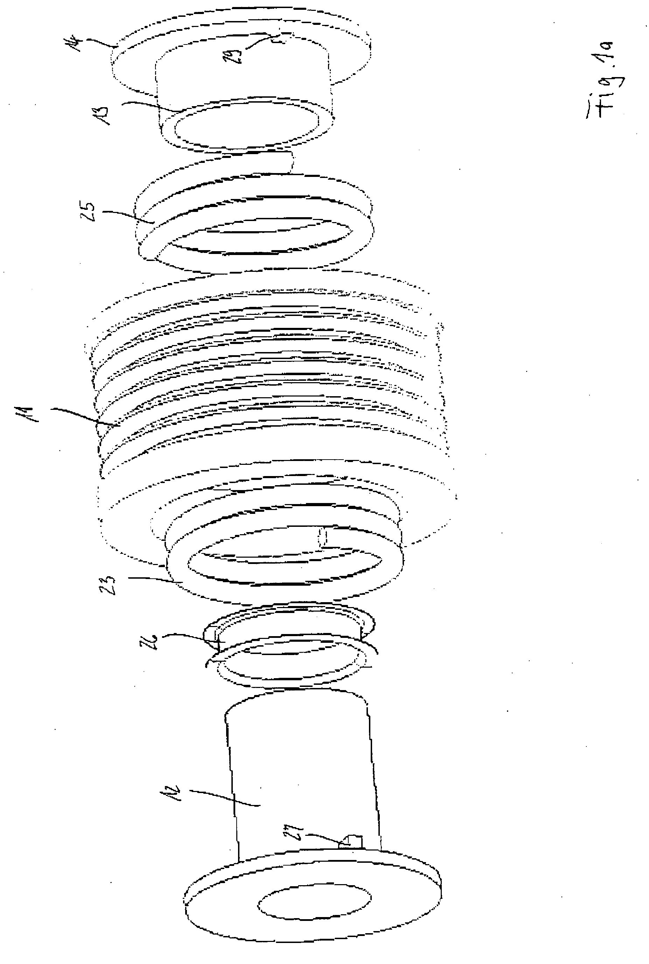

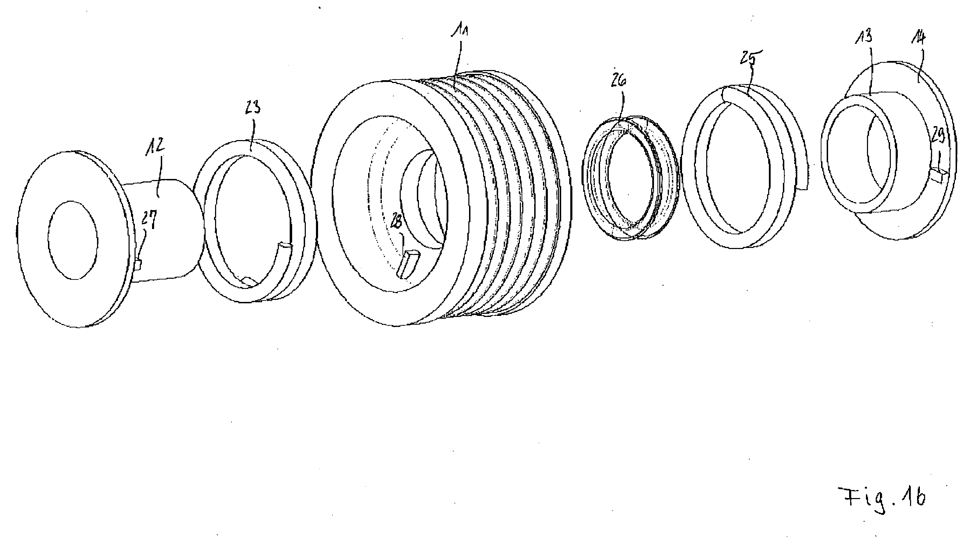

- Figur 1: zeigt einen erfindungsgemäßen Drehschwingungsdämpfer als Dekoppler
a) in Explosionsdarstellung in einer ersten Perspektive
b) in Explosionsdarstellung in einer zweiten Perspektive;

Die beiden Darstellungen der Figur 1 werden nachstehend gemeinsam beschrieben. Es ist eine erfindungsgemäße Drehschwingungsdämpferanordnung gezeigt, die einen Scheibenkranz 11 für einen Poly-V-Riemen und eine mit einer Generatorwelle verspannbare Nabe 12 aufweist, wobei auch hier die relative drehbare Lagerung zwischen beiden durch eine Gleithülse 13 erfolgt. Eine Scheibe 14 schließt einstückig an die Gleithülse 13 an und dient der Axialverbauung der Anordnung. Im Ringraum zwischen Scheibenkranz 11 und Nabe 12 sind zwei gleichsinnig gewickelte Schraubenfedern 23 und 25 in Axialrichtung nebeneinander angeordnet, deren jeweils axial äußeres Ende sich formschlüssig an der Nabe 12 bzw. der Scheibe 14 abstützt und deren jeweils axial inneres Ende sich ebenfalls formschlüssig an einer Innenfläche im Scheibenkranz 11 abstützt. An der Nabe 12 und an der Scheibe 14 sind jeweils Drehanschläge 27. 29 erkennbar. Am Scheibenkranz 11 ist (in Darstellung b) einer der Drehanschläge 28 zu erkennen. Zwischen den Federn sitzt ein Abstandshalter 26. Die beiden Schraubenfedern können in eingebautem Zustand entgegengesetzt vorgespannt sein. Aufgrund der gleichsinnigen Wicklungsrichtung baut sich bei relativer Verdrehung von Scheibenkranz 11 und Nabe 12 jeweils in einer der Federn eine zusätzliche Spannung auf, während sie in der anderen der Federn abgebaut wird. Bei entgegengesetzter relativer Verdrehung kehrt sich der Vorgang um. Eine Entkopplung der beiden Schraubenfedern gegenüber den beiden Bauteilen Scheibenkranz und Nabe ist hierbei in keinem Fall vorgesehen. Vielmehr findet eine reine elastische Federbewegung statt, die durch innere Federdämpfung gedämpft ist.

### Bezugszeichenliste

- 11: Scheibenkranz
- 12: Nabe
- 13: Gleithülse
- 14: Scheibe

- 23: Schraubenfeder

- 25: Schraubenfeder
- 26: Abstandshalter
- 27: Drehanschlag
- 28: Drehanschlag
- 29: Drehanschlag

## Patentansprüche

1. Antriebsscheibe mit einem Scheibenkranz (11) und einer Nabe (12), die drehbar ineinander gelagert sind, und mit Federmitteln, die zwischen Scheibenkranz (11) und Nabe (12) verbaut sind und deren eines Ende gegenüber dem Scheibenkranz (11) und deren anderes Ende gegenüber der Nabe (12) im Drehsinn festgelegt sind, **dadurch gekennzeichnet, daß**
die Federmittel aus zwei entgegengesetzt wirksamen Schraubenfedern (23, 25) bestehen, deren jeweils eine Enden mit dem Scheibenkranz (11) drehfest gekoppelt sind und deren jeweils andere Enden mit der Nabe (12) drehfest gekoppelt sind, wobei
die Schraubenfedern (23, 25) in Achsrichtung nebeneinander angeordnet und gegeneinander vorgespannt sind.

2. Antriebsscheibe nach Anspruch 1,
**dadurch gekennzeichnet,**
**daß** die Federn (23, 25) mit ersten Enden an Drehanschlägen (28) des Scheibenkranzes (11) formschlüssig anliegen.

3. Antriebsscheibe nach einem der Ansprüche 1 oder 2,
**dadurch gekennzeichnet,**
**daß** die Federn mit zweiten Enden an Drehanschlägen (27, 29) an der Nabe (12) formschlüssig anliegen.

4. Antriebsscheibe nach einem der Ansprüche 1 bis 3,
**dadurch gekennzeichnet,**
**daß** die Federn (23, 25) gleichsinnig gewickelt sind.

5. Antriebsscheibe nach einem der Ansprüche 1 bis 4,
**dadurch gekennzeichnet,**
**daß** die Federn (23, 25) sich mit ihrem jeweils in Achsrichtung außenliegenden Ende an der Nabe (12) und mit ihrem jeweils in Achsrichtung innenliegenden Ende am Scheibenkranz (11) abstützen.

## Claims

1. A drive disk with a disk rim (11) and with a hub (12) which are rotatably supported inside one another, and with spring means which are mounted between the disc rim (11) and the hub (12) and whose one end is fixed in the direction of rotation relative to the disc rim (11) and whose other end is fixed in the direction of rotation relative to the hub (12),
**characterised in**
**that** the spring means consist of two helical springs (23, 25) which are effective in opposite sense and whose respective one ends are coupled to the disc rim (11) in a rotationally fixed way and whose respective other ends are coupled to the hub (12) in a rotationally fixed way, wherein the helical springs (23, 25) are arranged side by side in the axial direction and are pretensioned relative to one another.

2. A drive disc according to claim 1,
**characterised in**
**that** the springs (23, 25), by means of first ends, rest in a form-locking way against rotational stops (28) of the disc rim (11).

3. A drive disc according to any one of claims 1 or 2,
**characterised in**
**that** the springs, by means of second ends, rest in a form-locking way against rotational stops (27, 29) at the hub (12).

4. A drive disc according to any one of claims 1 to 3,
**characterised in**
**that** the springs (23, 25) are wound in identical sense.

5. A drive disc according to any one of claims 1 to 4,
**characterised in**
**that** the springs (23, 25), by means of their respective ends axially positioned on the outside, are supported on the hub (12) and by means of their respective ends axially positioned on the inside, are supported on the disc rim (11).

## Revendications

1. Disque d'entraînement comprenant une couronne de disque (11) et un moyeu (12) montés rotatifs l'un dans l'autre, et des moyens de ressort qui sont agencés entre la couronne de disque (11) et le moyeu (12) et dont, pour chacun, l'une des extrémités est fixée dans le sens de la rotation, par rapport à la couronne de disque (11), et l'autre extrémité par rapport au moyeu (12),
**caractérisé en ce que** les moyens de ressort sont constitués par deux ressorts hélicoïdaux (23, 25) agissant de manière opposée, dont les unes des extrémités respectives sont couplées de manière fixe en rotation avec la couronne de disque (11), et les autres extrémités respectives avec le moyeu (12), les ressorts hélicoïdaux (23, 25) étant agencés côte à côte dans la direction axiale et étant mutuellement précontraints l'un à l'encontre de l'autre.

2. Disque d'entraînement selon la revendication 1,
**caractérisé en ce que** les ressorts (23, 25) s'appuient avec des premières extrémités, par engagement mécanique positif, contre des butées de rotation (28) de la couronne de disque (11).

3. Disque d'entraînement selon l'une des revendications 1 ou 2,
**caractérisé en ce que** les ressorts s'appuient avec des deuxièmes extrémités, par engagement mécanique positif, contre des butées de rotation (27, 29) sur le moyeu (12).

4. Disque d'entraînement selon l'une des revendications 1 à 3,
**caractérisé en ce que** les ressorts (23, 25) sont enroulés dans le même sens.

5. Disque d'entraînement selon l'une des revendications 1 à 4,
**caractérisé en ce que** les ressorts (23, 25) s'appuient sur le moyeu (12) avec leur extrémité respective située à l'extérieur dans la direction axiale, et sur la couronne de disque (11) avec leur extrémité respective située à l'intérieur dans la direction axiale.
